# EUROPÄISCHE PATENTSCHRIFT

(11) **EP 2 105 645 B1**
(45) Veröffentlichungstag und Bekanntmachung des Hinweises auf die Patenterteilung: **22.09.2010**
(21) Anmeldenummer: 09003994.2
(22) Anmeldetag: 20.03.2009
(51) Int. Cl.: F16L 37/084, F16L 37/23

(54) **Fluid-Steckkupplung mit Öffnungssicherung**
Fluid plug coupling with opening preventing means
Raccord enfichable pour fluide doté d'une sécurité contre l'ouverture

(30) Priorität: 28.03.2008 DE 102008016029
(43) Veröffentlichungstag der Anmeldung: 30.09.2009
(73) Patentinhaber: Rectus GmbH, 71735 Eberdingen-Nussdorf (DE)
(72) Erfinder: Simon, Horst, 51643 Gummersbach (DE); Witt, Stefan, 71735 Eberdingen (DE)
(74) Vertreter: Müller, Karl-Ernst

(56) Entgegenhaltungen:
- EP-A1- 1 422 462
- DE-A1-102005 025 548
- GB-A- 918 002

## Beschreibung

Die Erfindung betrifft eine Steckkupplung zur Durchleitung von unter Druck stehenden Fluiden insbesondere für Atemschutzgeräte, mit einem buchsenförmigen Aufnahmeteil und einem darin einsteckbaren Steckerteil, wobei das Aufnahmeteil ein Ventilgehäuse mit darin beweglich gelagerten Rastmitteln zum Verriegeln des Steckerteils in der in das Aufnahmeteil eingesteckten Stellung aufweist und auf dem Ventilgehäuse eine mit den Rastmitteln zusammenwirkende Verriegelungshülse sowohl zwischen zwei Axialstellungen hin und her beweglich als auch drehbar angeordnet ist derart, dass die in Axialrichtung federvorgespannte Verriegelungshülse in der Verriegelungsstellung die Rastmittel für den Steckerteil festlegt und in der anderen Axialstellung als Freigabestellung eine Bewegung der Rastmittel im Sinne einer Entnahme des Steckerteils aus dem Aufnahmeteil freigibt, und dass die auch in Drehrichtung federvorgespannte und zwischen einer ersten Drehstellung und einer zweiten Drehstellung drehbare Verriegelungshülse an dem Ventilgehäuse in ihrer ersten, der Verriegelungsstellung entsprechenden Drehstellung mit dem Ventilgehäuse verrastet ist und in ihrer zweiten Drehstellung eine Axialverschiebung der Verriegelungshülse in deren Freigabestellung erlaubt, und wobei eine zusätzliche, mit dem bei eingestecktem Steckerteil in der Steckkupplung anstehenden Druck des durchgeleiteten Fluids beaufschlagte Sicherungseinrichtung gegen ein Verdrehen der Verriegelungshülse vorgesehen ist.

Eine Steckkupplung mit den vorgenannten Merkmalen aus der DE 102005025548 A1 bekannt. Die darin beschriebene Steckkupplung besteht in ihrem für das Verständnis der nachstehend beschriebenen Erfindung wesentlichen Teilen aus einem Grundkörper als Aufnahmeteil und einem Steckerteil. Auf dem Grundkörper ist eine Verriegelungshülse zwischen zwei Axialstellungen beweglich angeordnet, die in der ersten Axialstellung Rastmittel für die Verriegelung des Steckerteils im Aufnahmeteil festlegt und in der anderen Axialstellung die Rastmittel im Sinne einer Entnahme des Steckerteils aus dem Aufnahmeteil freigibt. Um eine unbeabsichtigte Lösung der Steckkupplung zu erschweren, ist die Verriegelungshülse zusätzlich zwischen zwei Drehstellungen drehbar angeordnet derart, dass eine Verschiebung der Verriegelungshülse aus der einen Axialstellung, in der die Rastmittel gesperrt sind, in die andere Axialstellung, in der die Rastmittel freigegeben sind, solange gesperrt ist, bis die Verriegelungshülse aus einer ersten Drehstellung in eine zweite Drehstellung überführt ist. Als weitere Sicherungsmaßnahme gegen eine Lösung der Steckkupplung bei unter Druck stehender Steckkupplung ist zwischen dem den Steckerteil aufnehmenden Gründkörper des Aufnahmeteil und der Verriegelungshülse eine Fluidkammer wirksam. Diese Fluidkammer kommuniziert mit dem durch die Steckkupplung geleiteten Fluid und sorgt dafür, dass eine dem herrschenden Druck entsprechende Kraft erzeugt wird, die die Verriegelungshülse in der Verriegelungsstellung hält. Die erzeugte Kraft ist größer als diejenige Kraft, die ein Benutzer von Hand aufbringen kann, wenn er versucht, die Verriegelungshülse in die Entriegelungsstellung zu schieben.

Mit der bekannten Steckkupplung ist zunächst der Nachteil verbunden, dass die Anordnung der Fluidkammer in dem Aufnahmeteil und deren Anschluss an die Verriegelungshülse einen komplizierten Aufbau der Steckkupplung mit entsprechenden Einzelteilen bedingt, der in Herstellung und Montage entsprechend aufwendig ist. Weiterhin ist von Nachteil, dass sich die Sicherung der Verriegelungshülse bei unter Druck stehender Steckkupplung auf die Erschwerung von deren Verschiebung richtet und somit auf einem Kraftschluss beruht, so dass beispielsweise bei einem niedrigeren, in der Steckkupplung anstehenden Druck keine ausreichende Sicherheit gegen ein Lösen der Steckkupplung gegeben sein kann.

Der Erfindung liegt daher die Aufgabe zugrunde, bei einer Steckkupplung mit den eingangs genannten Merkmalen die Sicherheit gegen ein Entriegeln der Steckkupplung unter Druck zu verbessern und gleichzeitig die Steckkupplung in ihrem Aufbau zu vereinfachen.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Sicherungseinrichtung aus wenigstens einem in einer in dem Ventilgehäuse ausgebildeten, radial verlaufenden und mit dem druckführenden Durchleitungskanal der Steckkupplung verbundenen Bohrung angeordneten Kolben besteht, der bei geschlossener Steckkupplung durch den anliegenden Druck in eine den Außenumfang des Ventilgehäuses überragende und eine Drehbewegung der Verriegelungshülse verhindernde Stellung überführt ist.

Mit der Erfindung ist der Vorteil verbunden, dass durch den im Ventilgehäuse angeordneten, druckbeaufschlagten Kolben die Verriegelungshülse formschlüssig bereits in ihrer ersten, die Verriegelungsstellung für den Steckerteil bildenden Drehstellung festgelegt ist, so dass bei unter Druck stehender Steckkupplung die Verriegelungshülse schon nicht in ihre zweite Drehstellung überführt werden kann, in der eine Verschiebung der Verriegelungshülse in ihre Freigabestellung für die Rastmittel überhaupt erst möglich ist. Es kommt hinzu, dass die Drucksteuerung für den Kolben wesentlich einfacher zu handhaben ist als die Steuerung der im Stand der Technik für den aufzubringenden Kraftschluss zu erzeugenden Kraft. Mit dieser einfacheren Steuerung geht dann auch ein einfacherer Aufbau der Steckkupplung mit weniger Einzelteilen einher.

Nach einem Ausführungsbeispiel ist eine zusätzliche Sicherungsmaßnahme vorgesehen, mit welcher verhindert werden soll, dass ein Lösen der Steckkupplung dann möglich ist, wenn die Verriegelungshülse nach dem Einstecken des Steckerteils in das Aufnahmeteil etwa nicht vollständig in die Rastnut eingetreten ist. Dabei sind Zwischenstellungen der Verriegelungshülse denkbar, in denen die Verriegelungshülse noch mit einem Teil über dem Kolben liegt, so dass bei unter Druck stehendem Kolben dieser nicht ausschiebbar ist. Wird die Verriegelungshülse dann aus einer solchen Zwischenstellung in ihre eine Verschiebung zulassende Drehstellung zurückgedreht, ist eine Entriegelung der Steckkupplung auch unter Druck möglich. Zur Ausschaltung einer solchen Entriegelungsmöglichkeit sieht die Erfindung vor, dass die Verriegelungshülse an ihrer dem Kolben zugewandten Fläche mit einer Ausnehmung zum formschlüssigen Eingriff des Kolbens in die Verriegelungshülse und zur Festlegung der Verriegelungshülse sowohl in deren axialer wie auch radialer Bewegungsrichtung versehen ist. Wird also bei unter Druck stehendem Kolben die Verriegelungshülse in Richtung der eine Bewegung in die Freigabestellung zulassenden Drehstellung verdreht, so rastet der unter Druck stehende Kolben automatisch in die Ausnehmung der Verriegelungshülse ein und verhindert so trotz der in der Verschiebestellung befindlichen Verriegelungshülse deren mögliche Verschiebung.

Gemäß einer ersten Ausführungsform der Erfindung ist vorgesehen, dass die Verriegelungshülse einen radial einwärts einspringenden Nocken aufweist, der in der zweiten, die Axialverschiebung ermöglichenden Drehstellung der Verriegelungshülse längs einer an dem Ventilgehäuse ausgebildeten Abflachung verschiebbar ist und in der ersten, mit dem Ventilgehäuse verrasteten Drehstellung in eine in Umfangsrichtung an die Abflachung anschließende Rastnut des Ventilgehäuses eintritt, wobei die in dem Ventilgehäuse ausgebildete Bohrung derart ausgerichtet ist, dass der Kolben in seiner ausgeschobenen Stellung über die Abflachung des Verriegelungsgehäuses vorsteht und so eine Verdrehung der Verriegelungshülse aus der ersten Drehstellung in die zweite Drehstellung verhindert. Bei dieser Ausführungsform blockiert der aus der den Verschiebeweg für die Sicherungshülse bildenden Abflachung des Ventilgehäuses hervorstehende Kolben eine Verdrehung der Verriegelungshülse in ihre Drehstellung, in der nach Freikommen des Nockens aus der Rastnut des Ventilgehäuses der Nocken mit der Abflachung des Ventilgehäuses ausgerichtet ist und so längs der Abflachung verschiebbar ist.

Hierbei kann vorgesehen sein, dass der Kolben mittels einer in der Bohrung angeordneten Druckfeder in seine innerhalb des Ventilgehäuses liegende Stellung vorgespannt ist. Über die Auslegung der Kraft der Druckfeder ist somit der Ansprechdruck einstellbar, bei welchem der in der Steckkupplung nachstehende Druck des durchgeleiteten Fluids unter Überwindung der Federkraft der Druckfeder den Kolben in der Bohrung in seine ausgeschobene Stellung überführt, in welcher der Kolben die Verriegelungshülse festlegt. Ist die Steckkupplung zum Lösen drucklos gestellt, so führt die Druckfeder den Kolben wieder in seine innerhalb des Ventilgehäuses liegende Stellung zurück, in welcher die Verriegelungshülse drehbar ist.

Zur Abdichtung der Bohrung ist nach einem Ausführungsbeispiel vorgesehen, dass im radial auswärtigen Ende der Bohrung eine Dichthülse zur Abdichtung der Bohrung und zur dichtenden Führung des Kolbens eingesetzt ist, gegen die sich die mit einem Ende am Kolben anliegende Druckfeder mit ihrem anderen Ende abstützt.

Zur Ausführung der zusätzlichen Sicherung bei dieser Ausführungsform der Erfindung kann vorgesehen sein, dass an der dem Ventilgehäuse zugewandten Unterseite des Nockens eine Ausnehmung zur Aufnahme des Kolbens in dessen ausgeschobener Stellung ausgebildet ist.

Gemäß einer alternativen Ausführungsform der Erfindung ist vorgesehen, dass die Verriegelungshülse einen radial einwärts einspringenden Nocken aufweist, der in der zweiten, die Axialverschiebung ermöglichenden Drehstellung der Verriegelungshülse längs einer an dem Ventilgehäuse ausgebildeten Abflachung verschiebbar ist und in der ersten mit dem Ventilgehäuse verrasteten Drehstellung in eine in Umfangsrichtung an die Abflachung anschließende Rastnut eintritt, wobei die in dem Ventilgehäuse ausgebildete Bohrung außerhalb der Abflachung angeordnet und in der das Ventilgehäuse umschließenden Innenseite der Verriegelungshülse ein den Kolben in ihrer eine Verschiebung der Verriegelungshülse zulassenden zweiten Drehstellung in der eingeschobenen Stellung haltender Umfangsabschnitt sowie eine sich in Drehrichtung der Verriegelungshülse daran anschließende Einziehung zur Aufnahme des Kolbens in seiner ausgeschobenen Stellung angeordnet sind. Bei dieser Ausführungsform kann auf die Anordnung einer Feder zur Beaufschlagung des Kolbens verzichtet werden, weil die Bewegung des Kolbens einerseits durch den einwirkenden Druck und andererseits durch die zugeordnete Ausbildungen an der Innenseite der Verriegelungshülse gesteuert werden. Insofern reichen bei diesem Ausführungsbeispiel schon sehr geringe Drücke aus, um den Kolben in seine ausgeschobene Stellung zu bewegen. Andererseits wird der Kolben durch die Drehung der Verriegelungshülse in seine in die Bohrung eingeschobene Stellung zurück verschoben.

Im Hinblick auf eine diesbezügliche Steuerung der Kolbenbewegung ist nach einem Ausführungsbeispiel der Erfindung vorgesehen, dass der Übergang zwischen dem den Kolben in der eingeschobenen Stellung haltenden Umfangsabschnitt und der Einziehung als in Drehrichtung der Verriegelungshülse wirksame Anschlagkante für den Kolben mit einem den Kolben in die Bohrung eindrückenden Radius ausgebildet ist.

Auch bei diesem Ausführungsbeispiel der Erfindung ist vorgesehen, dass in dem den Kolben in seiner eingeschobenen Stellung haltenden Umfangsabschnitt der Verriegelungshülse eine Ausnehmung zur Aufnahme des Kolbens in dessen ausgeschobener Stellung ausgebildet ist, so dass mit dieser Maßnahme wiederum sichergestellt ist, dass bei nicht ausreichend zurückgestellter Verriegelungshülse und Verdrehung der Verriegelungshülse in die Verschiebestellung der unter Drück stehende Kolben in die zugeordnete Ausnehmung einrastet und dabei die Verriegelungshülse formschlüssig festlegt, obwohl sich die Verriegelungshülse nach der Ausrichtung von Nocken und Abflachung des Ventilgehäuses in einer Drehstellung befindet, in welcher eine Verschiebung der Verriegelungshülse grundsätzlich möglich ist.

Um nach Eintreten einer solchen Verriegelung diese Verriegelung wieder lösen zu können, kann vorgesehen sein, dass die in Umfangsrichtung gelegenen Begrenzungskanten der Ausnehmung mit einem den Kolben in die Bohrung eindrückenden Radius ausgebildet sind. Bei diesem Ausführungsbeispiel der Erfindung kann vorgesehen sein, dass der Kolben mittels einer auf seinem Umfang angeordneten Dichtung gegen die Bohrung abgedichtet ist.

Es kann vorgesehen sein, dass in einer symmetrischen Anordnung auf den einander gegenüberliegenden Seiten von Ventilgehäuse und Verriegelungshülse jeweils ein Nocken und zugeordnete Abflachung und entsprechend zwei Bohrungen mit Kolben und zugeordneten Umfangsabschnitten sowie Einziehungen angeordnet sind.

In der Zeichnung sind Ausführungsbeispiele der Erfindung wiedergegeben, welche nachstehend beschrieben sind. Es zeigen:
- Fig. 1: eine Steckkupplung in einer schematischen geschnittenen Seitenansicht in einem entkuppelten Zustand mit ausgekuppeltem Steckerteil und in der Freigabestellung befindlicher Verriegelungshülse,
- Fig. 2: den Gegenstand der Figur 1 in einer teilweisen Querschnittsansicht von Verriegelungshülse und Sicherungseinrichtung dafür,
- Fig. 3: den Gegenstand der Figur 1 bei eingekuppeltem Steckerteil,
- Fig. 4: eine den eingekuppelten Zustand gemäß Figur 3 entsprechende Querschnittsansicht in einer Darstellung entsprechend Figur 2,
- Fig. 5: ein anderes Ausführungsbeispiel der Steckkupplung in einer schematischen geschnittenen Seitenansicht in einem entkuppelten Zustand mit ausgekuppeltem Steckerteil und in der Freigabestellung befindlicher Verriegelungshülse,
- Fig. 6: den Gegenstand der Figur 5 in einer teilweisen Querschnittsansicht von Verriegelungshülse und Sicherungseinrichtung dafür,
- Fig. 7: den Gegenstand der Figur 5 bei eingekuppeltem Steckerteil,
- Fig. 8: eine den eingekuppelten Zustand gemäß Figur 7 entsprechende Querschnittsansicht in einer Darstellung entsprechend Figur 6.

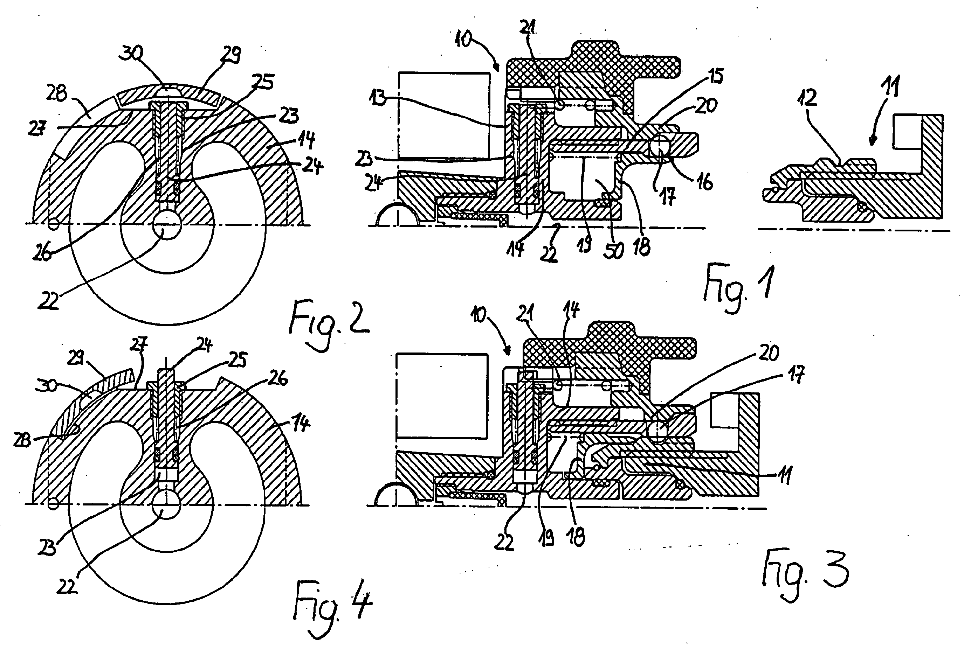

Wie sich zunächst aus Figur 1 ergibt, besteht die Steckkupplung aus einem Aufnahmeteil 10 und einem darin einsteckbaren Steckerteil 11. Soweit es im einzelnen auf den Aufbau des Steckerteils 11 für das Verständnis der vorliegenden Erfindung nicht ankommt, ist nur herauszustellen, dass an dem Steckerteil eine Verriegelungsnut 12 für die noch zu beschreibende Verriegelung des Steckerteils 11 im Aufnahmeteil 10 ausgebildet ist.

Das Aufnahmeteil 10 besteht aus einem Ventilgehäuse 13 mit einem Grundkörper 14 und einer damit verschraubten Grundkörperhülse 15, in deren vorderem Bereich Ausnehmungen 16 ausgebildet sind, in die Rastkugeln 17 eingesetzt sind. Grundkörper 14 und Grundkörperhülse 15 bilden gemeinsam einen Aufnahmeraum 50 für das Steckerteil 11 aus, in welchem Aufnahmeraum 50 eine innere Steuerhülse 18 gegen die Kraft einer Druckfeder 19 verschiebbar angeordnet ist. Die Steuerhülse 18 hält dabei die Rastkugeln 17 aus der Einsteckbahn für das Steckerteil 11 heraus.

Auf der Außenseite der Grundkörperhülse 15 ist eine Verriegelungshülse 20 zwischen einer ersten Axialstellung gemäß Figur 1 und einer zweiten Axialstellung gemäß Figur 3 verschiebbar angeordnet, und zwar gegen die Kraft einer Druckfeder 21. In der aus Figur 1 ersichtlichen ersten Axialstellung bei entkuppelter Steckkupplung steht die Verriegelungshülse 20 mit einem Arm über der zugeordneten Ausnehmung 16 in der Grundkörperhülse 15 und beaufschlagt die darin liegende Rastkugel 17 mit einer in Radialrichtung wirkenden Kraft in Anlage der Rastkugel 17 an der inneren Steuerhülse 18. Wird, wie sich aus einem Vergleich der Figuren 1 und 3 ergibt, das Steckerteil 11 unter Beaufschlagung der inneren Steuerhülse 18 in den Aufnahmeraum 50 des Ventilgehäuses 13 eingeschoben, so rasten die Rastkugeln 17 in die Verriegelungsnut 12 des Steckerteils 11 ein, wonach die Verriegelungshülse 20 unter der Wirkung der Druckfeder 21 in ihre zweite Axialstellung (Figur 3) verschoben wird, in welcher die Verriegelungshülse 20 die Rastkugeln 17 in der Verriegelungsnut 12 des Steckerteils 11 festlegt und sichert.

Die Verriegelungshülse 20 besteht bei dem dargestellten Ausführungsbeispiel aus mehreren Teilen, was aber konstruktiv beziehungsweise funktional bedingt ist und für die Verwirklichung der Erfindung nicht von Bedeutung ist.

Wie sich aus einer Zusammenschau der Figuren 1 bis 4 ergibt, ist an dem Grundkörper 14 des Ventilgehäuses 13 eine sich in Längsrichtung des Ventilgehäuses 13 erstreckende Abflachung 27 ausgebildet, deren Länge mindestens dem Verschiebeweg der Verriegelungshülse 20 zwischen deren Freigabestellung (Figur 1) und deren Sicherungsstellung (Figur 3) entspricht. Die Verriegelungshülse 20 weist einen nach innen einspringenden Nocken 29 auf, der in der einen Drehstellung der Verriegelungshülse 20 mit der Abflachung 27 derart ausgerichtet ist, dass der Nocken 29 über die Abflachung 27 gleitet und damit eine Verschiebung der Verriegelungshülse 20 ermöglicht. Weiterhin ist in dem Grundkörper 14 eine Rastnut 28 zur Aufnahme des Nockens 29 ausgebildet, in die der Nocken 29 in der eingekuppelten Stellung der Steckkupplung einrastet, wie sich aus einer Zusammenschau der Figuren 3 und 4 ergibt. Dabei steht die Verriegelungshülse 20 ebenfalls unter der Wirkung einer Drehfeder, die die Verriegelungshülse 20 in diejenige Stellung vorspannt, in welcher der Nocken 29 der Verriegelungshülse 20 in der Rastnut 28 des Grundkörpers 14 liegt. Wird also ausgehend von der Darstellung gemäß Figuren 1 und 2 das Steckerteil 11 in das Aufnahmeteil 10 eingekuppelt, so verschiebt sich die Verriegelungshülse 20 unter der Wirkung der Feder 21 in die Sicherungsstellung gemäß Figur 3, und wird in dieser Stellung in ihre zweite Drehstellung gedreht, in welcher der Nocken 29 in die Rastnut 28 eintritt. Zur Entriegelung beziehungsweise Lösung der Steckkupplung ist es somit erforderlich, zunächst die Verriegelungshülse 20 soweit zu drehen, dass der Nocken 29 aus der Rastnut 28 freigekommen und mit der Abflachung 27 ausgerichtet ist, so dass eine Verschiebung der Verriegelungshülse 20 längs der Abflachung 27 möglich ist.

Zur Sicherung der Einsteckkupplung gegen ein Lösen bei unter Druck stehender Einsteckkupplung ist in dem Grundkörper 14 eine radial verlaufende Bohrung 23 ausgebildet, die so angeordnet ist, dass sie einerseits an den unter Druck stehenden Durchleitkanal 22 der eingekuppelten Steckkupplung angeschlossen ist und mit ihrem anderen Ende in der Abflachung 27 endet. In der Bohrung 23 ist ein Kolben 24 verschiebbar angeordnet, wobei an dem in die Abflachung 27 mündenden Ende der Bohrung 23 eine Dichthülse 25 eingesetzt ist, die die bei eingekuppelter Steckerkupplung unter Druck geratene Bohrung 23 abdichtet. In der Dichthülse 25 ist der Kolben 24 dichtend geführt, wobei der Kolben 24 durch eine Druckfeder 26, die sich einerseits an dem Kolben und andererseits an der Dichthülse 25 abstützt, in seine eingeschobene Stellung (Figur 2) vorgespannt ist.

Kommt die Bohrung 23 bei eingekuppelter Steckkupplung und Durchleitung des unter Druck stehenden Fluids unter Druck, so wird der Kolben 24 entgegen der auf ihn einwirkenden Feder 26 ausgeschoben, so dass ein Ende über die Abflachung 27 vorsteht. Da in dieser eingekuppelten Stellung sich die Verriegelungshülse 20 in einer Drehstellung befindet, in welcher ihr Nocken 29 in der Rastnut 28 liegt, ist eine Drehung der Verriegelungshülse 20 in die in Figur 2 dargestellte Verschiebestellung bei dem unter Druck ausgeschobenen Kolben 24 verhindert. Auf diese Weise ist durch die formschlüssig arbeitende Sicherungseinrichtung sichergestellt, dass ein Entkuppeln der Steckkupplung unter Druck nicht möglich ist.

Als zusätzliche Maßnahme weist der Nocken 29 an seiner dem Grundkörper 14 zugewandten Unterseite eine Ausnehmung 30 zur Aufnahme des Kolbens 24 in dessen ausgeschobener Stellung. Soweit nämlich in der vorderen Verriegelungsstellung für die Rastkugel 17 die Verriegelungshülse 20 nicht vollständig in ihre Sicherungsstellung mit in der Rastnut 28 befindlichen Nocken 29 verdreht ist sondern eine Zwischenstellung eingenommen hat, kann diese Zwischenstellung so aussehen, dass das Ende des Nockens 29 noch über dem Kolben 24 steht, so dass unter Druck kommende Kolben 24 nicht vollständig aus der Bohrung 23 austreten kann, sondern nur an der Unterseite gegen den Nocken 29. Aus einer solchen Zwischenstellung wäre bei unter Druck stehendem Kolben keine Fixierung der Verriegelungshülse 20 durch den Kolben gegeben. Durch die an dem Nocken 29 vorgesehene Ausnehmung 30 ist nun sichergestellt, dass bei einem Verdrehen der Sicherungshülse 20 in ihre Freigabestellung der unter Druck stehende Kolben 24 in die Ausnehmung 30 des Nockens 29 einrastet und somit die Verriegelungshülse 20 formschlüssig an dem Grundkörper 14 des Ventilgehäuses 13 festlegt, so dass eine Verschiebung der Verriegelungshülse 20 ausgeschlossen ist.

Soll bei drucklos gestellter Einsteckkupplung diese entkuppelt werden, so drückt die Feder 26 den Kolben 24 in seine Ausgangsstellung zurück, in welcher nun eine Verdrehung der Verriegelungshülse 20 in ihre eine Verschiebung zulassende Drehstellung möglich ist.

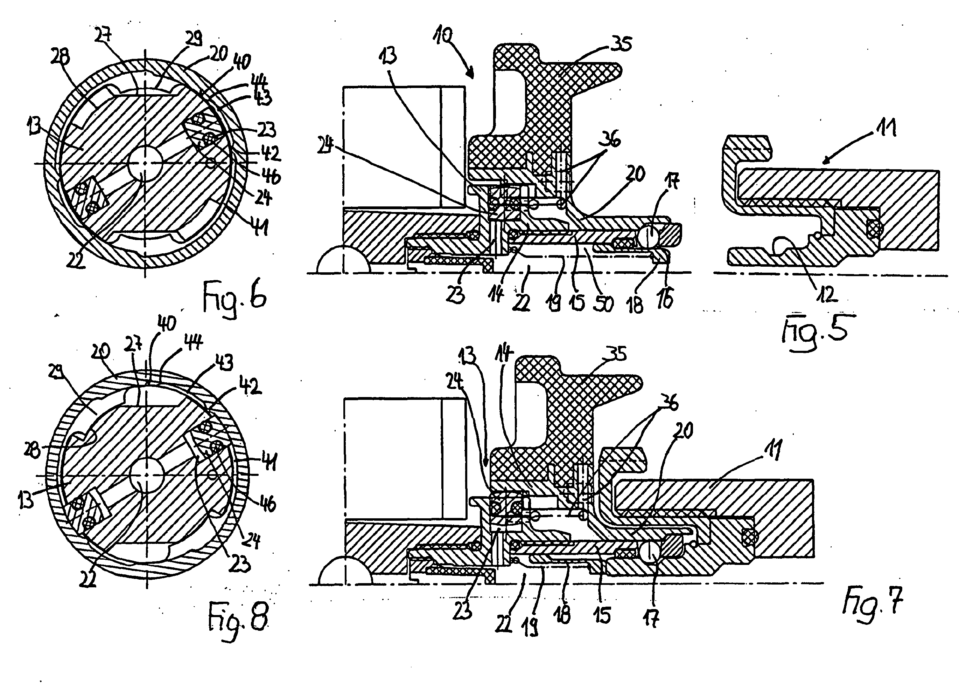

Das in den Figuren 5 bis 8 dargestellte Ausführungsbeispiel unterscheidet sich von dem vorstehend zu Figuren 1 bis 4 beschriebenen Ausführungsbeispiel im wesentlichen durch eine alternative Ausbildung der druckgesteuerten Kolbenanordnung zur Feststellung der Verriegelungshülse 20. Soweit darüber hinaus weitere konstruktive Unterschiede in der Ausbildung des Ventilgehäuses 13 und des Steckerteils 11 bestehen, sind diese Abweichungen für die vorliegende Erfindung nicht weiter relevant, so dass hierauf nicht gesondert eingegangen ist. Es wird lediglich angemerkt, dass zur Betätigung der Verriegelungshülse 20 ein Handrad 25 vorgesehen und entsprechend mit der Verriegelungshülse 20 verbunden ist, und dass zur Beaufschlagung von Verriegelungshülse 20 beziehungsweise Handrad 35 mit sowohl einer axial wirkenden als auch in Drehrichtung wirkenden Federkraft eine einheitliche Drehdruckfeder 36 vorgesehen ist.

Soweit auch bei diesem Ausführungsbeispiel als Sicherungseinrichtung für die Verriegelungshülse 20 wiederum ein in einer Bohrung 23 unter Druck verschiebbarer Kolben 24 vorgesehen ist, entfällt bei diesem Ausführungsbeispiel eine Federbeaufschlagung des Kolbens. Vielmehr erfolgt die Steuerung des Kolbens zwischen seiner aus der Bohrung 23 ausgeschobenen Stellung und seiner in dem Grundkörper 14 eingeschobenen Stellung über die Drehung der Verriegelungshülse 20, die hierzu den Grundkörper 14 des Ventilgehäuses 13 vollumfänglich umschließt. An der Innenseite der Verriegelungshülse 20 ist zunächst ein Umfangsabschnitt 40 ausgebildet, der den Kolben 24 in der in die Bohrung 23 eingeschobenen Stellung hält. In dieser Stellung entsprechend Figuren 5 und 6 ist die Verriegelungshülse 20 mit dem an ihr ausgebildeten Nocken 29 auf die Abflachung 27 des Grundkörpers 14 ausgerichtet und somit zwischen den ihr zugewiesenen Axialstellungen verschiebbar. An den Umfangsabschnitt 40 schließt in Umfangsrichtung eine Einziehung 41 an, die einen ausreichenden Freiraum für den Ausschub des Kolbens 24 aus der Bohrung 23 bietet, so dass in der ausgeschobenen Stellung der Kolben 24 über die Oberfläche des Grundkörpers 14 des Ventilgehäuses 13 vorsteht. Die zwischen dem Umfangsabschnitt 40 und der Einziehung 41 befindliche Anschlagkante 42 stellt somit die formschlüssige Sicherung für die Festlegung der Verriegelungshülse 20 in der in Figuren 7 und 8 dargestellte Verriegelungsstellung dar, in welcher aufgrund der Einwirkung der Drehdruckfeder 36 die Verriegelungshülse 20 in ihre Drehstellung verdreht ist, in welcher der Nocken 29 in der Rastnut 28 liegt und eine Verschiebung der Verriegelungshülse 20 verhindert. Ist aufgrund des einwirkenden Drucks der Kolben 24 in der Bohrung 23 auswärts verschoben und liegt somit in der Einziehung 41 der Verriegelungshülse 20, ist eine Verdrehung der Verriegelungshülse 20 in deren andere Drehstellung gemäß Figur 6 ausgeschlossen.

Bei diesem Ausführungsbeispiel der Erfindung wird die Ausschubbewegung des Kolbens 24 alleine durch den in dem Durchleitkanal 22 herrschenden Druck gesteuert, wobei der Kolben 24 durch eine auf seinem äußeren Umfang angeordnete Dichtung 46 gegen die Bohrung 23 abgedichtet ist. Da insofern der Kolben 24 in der Bohrung 23 entsprechend leicht beweglich ist, reichen schon geringe Drücke aus, um die Bewegung des Kolbens 24 herbeizuführen. Soweit eine Rückbewegung des Kolbens 24 in die Bohrung 23 hinein bei drucklos gestellter Einsteckkupplung vorzunehmen ist, erfolgt diese Rückführung des Kolbens 24 durch die Verdrehung der Verriegelungshülse 20 von der in Figur 8 dargestellten Drehstellung in die in Figur 6 dargestellte Drehstellung, und hierzu ist Anschlagkante 42 mit einem entsprechenden Radius ausgeführt, der eine Verschiebung des Kolbens 24 erleichtert.

Wie bei dem zu Figuren 1 bis 4 beschriebenen Ausführungsbeispiel ist auch bei dieser Ausführungsform in dem Umfangsabschnitt 40 der Verriegelungshülse 20 eine Ausnehmung 43 vorgesehen, in welche der unter Druck stehende Kolben 24 einrastet, wenn die Verriegelungshülse 20 noch unter Druckeinwirkung in ihre Verschiebestellung verdreht werden soll. Damit auch diese Sicherungsstellung aufgehoben werden kann, sind die Begrenzungskanten 44 der Ausnehmung 43 mit einem entsprechenden Radius ausgebildet, der das Einschieben des drucklosen Kolbens 24 in die Bohrung 23 erleichtert.

Bei dem in den Figuren 5 bis 8 dargestellten Ausführungsbeispiel sind in symmetrischer Anordnung jeweils zwei Bohrungen mit zwei Kolben vorgesehen, und entsprechend weist die Verriegelungshülse zwei Nocken 29 sowie zwei Umfangsabschnitte 40 und Einziehungen 41 auf, wie auch der Grundkörper 14 des Ventilgehäuses 13 mit zwei Abflachungen 27 und zwei Rastnuten 28 ausgestaltet ist.

Im übrigen vollzieht sich aber die Funktion der Steckkupplung gemäß Figuren 5 bis 8 wie zu dem Ausführungsbeispiel gemäß Figuren 1 bis 4 beschrieben.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Steckkupplung zur Durchleitung von unter Druck stehenden Fluiden insbesondere für Atemschutzgeräte, mit einem buchsenförmigen Aufnahmeteil (10) und einem darin einsteckbaren Steckerteil (11), wobei das Aufnahmeteil (10) ein Ventilgehäuse (13) mit darin beweglich gelagerten Rastmitteln (17) zum Verriegeln des Steckerteils (11) in der in das Aufnahmeteil (10) eingesteckten Stellung aufweist und auf dem Ventilgehäuse (13) eine mit den Rastmitteln (17) zusammenwirkende Verriegelungshülse (20) sowohl zwischen zwei Axialstellungen hin und her beweglich als auch drehbar angeordnet ist derart, dass die in Axialrichtung federvorgespannte Verriegelungshülse (20) in der Verriegelungsstellung die Rastmittel (17) für den Steckerteil (11) festlegt und in der anderen Axialstellung als Freigabestellung eine Bewegung der Rastmittel (17) im Sinne einer Entnahme des Steckerteils (11) aus dem Aufnahmeteil (10) freigibt, und dass die auch in Drehrichtung federvorgespannte und zwischen einer ersten Drehstellung und einer zweiten Drehstellung drehbare Verriegelungshülse (20) an dem Ventilgehäuse in ihrer ersten, der Verriegelungsstellung entsprechenden Drehstellung mit dem Ventilgehäuse (13) verrastet ist und in ihrer zweiten Drehstellung eine Axialverschiebung der Verriegelungshülse (20) in deren Freigabestellung möglich ist, und wobei eine zusätzliche, mit dem bei eingestecktem Steckerteil (11) in der Steckkupplung anstehenden Druck des durchgeleiteten Fluids beaufschlagte Sicherungseinrichtung gegen ein Verdrehen der Verriegelungshülse vorgesehen ist, **dadurch gekennzeichnet, dass** die Sicherungseinrichtung aus wenigstens einem in einer in dem Ventilgehäuse (13) ausgebildeten, radial verlaufenden und mit dem druckführenden Durchleitungskanal (22) der Steckkupplung verbundenen Bohrung (23) angeordneten Kolben (24) besteht, der bei geschlossener Steckkupplung durch den anliegenden Druck in eine den Außenumfang des Ventilgehäuses (13) überragende und eine Drehbewegung der Verriegelungshülse (20) verhindernde Stellung überführt ist.

2. Steckkupplung nach Anspruch 1, **dadurch gekennzeichnet, dass** die Verriegelungshülse (20) an ihrer dem Kolben (24) zugewandten Fläche mit einer Ausnehmung (30, 40) zum formschlüssigen Eingriff des Kolbens (24) in die Verriegelungshülse (20) und zur Festlegung der Verriegelungshülse (20) sowohl in deren axialer wie auch radialer Bewegungsrichtung versehen ist.

3. Steckkupplung nach Anspruch 1 oder 2, **dadurch gekennzeichnet, dass** die Verriegelungshülse (20) einen radial einwärts einspringenden Nocken (29) aufweist, der in der zweiten, die Axialverschiebung ermöglichenden Drehstellung der Verriegelungshülse (20) längs einer an dem Ventilgehäuse (13) ausgebildeten Abflachung (27) verschiebbar ist und in der ersten, mit dem Ventilgehäuse (13) verrasteten Drehstellung in eine in Umfangsrichtung an die Abflachung (27) anschließende Rastnut (28) des Ventilgehäuses (13) eintritt, wobei die in dem Ventilgehäuse (13) ausgebildete Bohrung (23) derart ausgerichtet ist, dass der Kolben (24) in seiner ausgeschobenen Stellung über die Abflachung (27) des Verriegelungsgehäuses (13) vorsteht und so eine Verdrehung der Verriegelungshülse (20) aus der ersten Drehstellung in die zweite Drehstellung verhindert.

4. Steckkupplung nach Anspruch 3, **dadurch gekennzeichnet, dass** der Kolben (24) mittels einer in der Bohrung (23) angeordneten Druckfeder (26) in seine innerhalb des Ventilgehäuses (13) liegende Stellung vorgespannt ist.

5. Steckkupplung nach Anspruch 3 oder 4, **dadurch gekennzeichnet, dass** im radial auswärtigen Ende der Bohrung (23) eine Dichthülse (25) zur Abdichtung der Bohrung (23) und zur dichtenden Führung des Kolbens (24) eingesetzt ist, gegen die sich die mit einem Ende am Kolben (24) anliegende Druckfeder (26) mit ihrem anderen Ende abstützt.

6. Steckkupplung nach einem der Ansprüche 2 bis 5, **dadurch gekennzeichnet, dass** an der dem Ventilgehäuse (13) zugewandten Unterseite des Nockens (28) eine Ausnehmung (30) zur Aufnahme des Kolbens (24) in dessen ausgeschobener Stellung ausgebildet ist.

7. Steckkupplung nach Anspruch 1 oder 2, **dadurch gekennzeichnet, dass** die Verriegelungshülse (20) einen radial einwärts einspringenden Nocken (29) aufweist, der in der zweiten, die Axialverschiebung ermöglichenden Drehstellung der Verriegelungshülse (20) längs einer an dem Ventilgehäuse (13) ausgebildeten Abflachung (27) verschiebbar ist und in der ersten mit dem Ventilgehäuse (13) verrasteten Drehstellung in eine in Umfangsrichtung an die Abflachung (27) anschließende Rastnut (28) eintritt, wobei die in dem Ventilgehäuse (13) ausgebildete Bohrung (23) außerhalb der Abflachung (27) angeordnet und in der das Ventilgehäuse (13) umschließenden Innenseite der Verriegelungshülse (20) ein den Kolben (24) in ihrer eine Verschiebung der Verriegelungshülse (20) zulassenden zweiten Drehstellung in der eingeschobenen Stellung haltender Umfangsabschnitt (40) sowie eine sich in Drehrichtung der Verriegelungshülse (20) daran anschließende Einziehung (41) zur Aufnahme des Kolbens (24) in seiner ausgeschobenen Stellung angeordnet sind.

8. Steckkupplung nach Anspruch 7, **dadurch gekennzeichnet, dass** der Übergang zwischen dem den Kolben (24) in der eingeschobenen Stellung haltenden Umfangsabschnitt (40) und der Einziehung (41) als in Drehrichtung der Verriegelungshülse (20) wirksame Anschlagkante (42) für den Kolben (24) mit einem den Kolben (24) in die Bohrung (23) eindrückenden Radius ausgebildet ist.

9. Steckkupplung nach Anspruch 7 oder 8, **dadurch gekennzeichnet, dass** in dem den Kolben (24) in seiner eingeschobenen Stellung haltenden Umfangsabschnitt (40) der Verriegelungshülse (20) eine Ausnehmung (43) zur Aufnahme des Kolbens (20) in dessen ausgeschobener Stellung 10 ausgebildet ist.

10. Steckkupplung nach Anspruch 9, **dadurch gekennzeichnet, dass** die in Umfangsrichtung gelegenen Begrenzungskanten (44) der Ausnehmung (43) mit einem den Kolben (24) in die Bohrung (23) eindrückenden Radius ausgebildet sind.

11. Steckkupplung nach einem der Ansprüche 7 bis 10, **dadurch gekennzeichnet, dass** der Kolben (24) mittels einer auf seinem Umfang angeordneten Dichtung (46) gegen die Bohrung (23) abgedichtet ist.

12. Steckkupplung nach einem der Ansprüche 7 bis 11, **dadurch gekennzeichnet, dass** in einer symmetrischen Anordnung auf den einander gegenüberliegenden Seiten von Ventilgehäuse (13) und Verriegelungshülse (20) jeweils ein Nocken (29) und zugeordnete Abflachung (27) und entsprechend zwei Bohrungen (23) mit Kolben (24) und zugeordneten Umfangsabschnitten (40) sowie Einziehungen (41) angeordnet sind.

## Claims

1. Plug coupling for directing a fluid under pressure, especially for breathing-protection devices, with a box-shaped receiving part (10) and a plug part (11) being insertable into the receiving part (10) whereby the receiving part (10) has a valve housing (13) with locking means (17) movably mounted therein for locking the plug part (11) within its plugged-in position in the receiving part (10) and a locking sleeve (20) is positioned on the valve housing (13) and cooperating with the locking means (17), arranged to be movable back and forth between two axial positions and also rotatable in such a way that the locking sleeve (20), which is spring-prestressed in the axial direction, in their locking position is fixing the locking means (17) for the plug part (11) and in their other axial position is releasing a movement of the locking means (17) for the plug part (11) as a release position in the sense of removing the plug part (11) from the receiving part (10), and that the locking sleeve (20), also being spring-prestressed in the direction of rotation and being rotatable between a first rotational position and a second rotational position on the valve housing (13) is locked with the valve housing (13) in its first rotational position, and in its second rotational position an axial movement of the locking sleeve (20) is possible into its releasing position and whereby an additional security device for preventing rotation of the locking sleeve (20) is provided, being applied with the pressure of the fluid led through it with the plug part (11) being in its position plugged into the plug coupling, **characterised in that** the security device is consisting of at least one piston (24) arranged in a bore (23) of the valve housing (13) running radially in and being connected to a pressure-directing channel (22) of the plug coupling, which piston (24) at the closed plug coupling is moved by the applied pressure into a position that projects beyond the outer perimeter of the valve housing (13) and prevents a rotary movement of the locking sleeve (20).

2. Plug coupling according to claim 1, **characterised in that** the locking sleeve (20) is provided, on its surface facing the piston (24), with a recess (30, 40) for a positive-locking engagement of the piston (24) into the locking sleeve (20) and for fixing the locking sleeve (20) in both its axial and rotary moving direction.

3. Plug coupling according to claim 1 or 2, **characterised in that** the locking sleeve (20) has a cam (29) protruding radially inward which in the second rotational position of the locking sleeve (20) making an axial movement possible, is movable along a flattening (27) formed on the valve housing (13), and in the first rotational position being locked with the valve housing (13) is entering a locking groove (28) of the valve housing (13) being adjacent to the flattening (27) in the circumferential direction whereby the bore (23) formed in the valve housing (13) is arranged in such a way that the piston (24) is projecting about the flattening (27) of the valve housing (13) in its pushed-out position and thus is preventing the locking sleeve (20) from being rotated from the first rational position to the second rotational position.

4. Plug coupling according to claim to 3, **characterised in that** the piston (24) is pre-stressed into its position inside the valve housing (13) by means of a compression spring (26) arranged in the bore (23).

5. Plug coupling according to claim 3 or 4, **characterised in that** at the radially outward end of the bore (23) a sealing sleeve (25) is placed for sealing the bore (23) and for a sealed guiding of the piston (24), against which the pressure spring (26) lying against the piston (24) with their one end is supported at its other end.

6. Plug coupling according to one of the claims 2 to 5, **characterised in that** a recess (30) is formed in the bottom of the cam (28) facing the valve housing (13) for receiving the piston (24) in its pushed-out position.

7. Plug coupling according to claim 1 or 2, **characterised in that** the locking sleeve (20) has a cam (29) protruding radially inward which in the second rotational position of the locking sleeve (20) making an axial movement possible, is movable along a flattening (27) formed on the valve housing (13) and in the first rotational position, being locked with the valve housing (13) is entering a locking groove (28) being adjacent to the flattening (27) in the circumferential direction, whereby the bore (23) formed in the valve housing (13) is arranged outside the flattening (27) and a circumferential segment (40) is arranged within the inner surface of the locking sleeve (20) surrounding the valve housing (13) holding the piston (24) in its pushed-in position, when the locking sleeve (20) being in its second rotational position permitting a sliding of the locking sleeve (20), and further a recess (41) being adjacent thereto in the rotational direction of the locking sleeve (20) is arranged for receiving the piston (24) in its pushed-out position.

8. Plug coupling according to claim 7, **characterised in that** the transition between the circumferential segment (40) holding the piston (24) in its pushed-in position and the recess (41) is formed as a stopping edge (42) for the piston (24) being active in the direction of the rotation and having a radius pressing the piston (24) into the bore (23).

9. Plug coupling according to claim 7 or 8, **characterised in that** within the circumferential segment (40) of the locking sleeve (20) holding the piston (24) in its pushed-in position a recess (43) is arranged for receiving the piston (24) in its pushed-out position.

10. Plug coupling according to claim 9, **characterised in that** the edges (44) delimiting the recess (43) in the circumferential direction are formed with a radius that presses the piston (24) into the bore (23).

11. Plug coupling according to one of the claims 7 to 10, **characterised in that** the piston (24) is sealed against the bore (23) by means of a seal (46) arranged on its circumference.

12. Plug coupling according to one of the claims 7 to 11, **characterised in that** on the sides of the valve housing (13) and of the locking sleeve (20) lying opposite each other a cam (29) and a respective flattening (27) are located in a symmetrical manner and further two bores (23) including pistons (24) and respective circumferential segments (40) as well as recesses (41) are located..

## Revendications

1. Accouplement enfichable pour le passage de fluides mis sous pression, en particulier pour des appareils respiratoires, comprenant une partie de réception (10) en forme de douille et une partie enfichable (11) emboîtable dans la première, la partie de réception (10) présentant un carter de vanne (13) avec des moyens d'encliquetage (17) logés de façon mobile à l'intérieur pour le verrouillage de la partie enfichable (11) dans la position emboîtée dans la partie de réception (10) et un manchon de verrouillage (20) coopérant avec les moyens d'encliquetage (17) étant disposé sur le carter de vanne (13) aussi bien de façon mobile entre deux positions axiales que de façon rotative, de telle sorte que le manchon de verrouillage (20) prétendu par ressort dans le sens axial fixe les moyens d'encliquetage (17) pour la partie enfichable (11) dans la position de verrouillage et, dans l'autre position axiale comme position de déblocage, libère un mouvement des moyens d'encliquetage (17) dans le sens d'un enlèvement de la partie enfichable (11) de la partie de réception (10), et en ce que le manchon de verrouillage (20), également prétendu par ressort dans le sens de rotation et pouvant tourner entre une première position de rotation et une seconde position de rotation, est encliqueté sur le carter de vanne dans sa première position de rotation correspondant à la position de rotation de verrouillage avec le carter de vanne (13) et en ce que, dans sa seconde position de rotation, un déplacement axial du manchon de verrouillage (20) dans sa position de libération est possible, et un dispositif de blocage supplémentaire, sollicité avec la pression du fluide en formation dans l'accouplement enfichable lorsque la partie enfichable (11) est emboîtée, contre une torsion du manchon de verrouillage qui est prévu, **caractérisé en ce que** le dispositif de blocage comprend au moins un piston (24) disposé dans un alésage (23) conçu dans le carter de vanne (13), agencé radialement et relié au canal de passage (22) véhiculant la pression de l'accouplement enfichable, lequel piston est transféré, lorsque l'accouplement enfichable est fermé, par la pression appliquée dans une position dépassant du pourtour extérieur du carter de vanne (13) et empêchant un mouvement de rotation du manchon de verrouillage (20).

2. Accouplement enfichable selon la revendication 1, **caractérisé en ce que** le manchon de verrouillage (20) est dotée sur sa surface tournée vers le piston (24) d'un évidement (30, 40) pour l'engagement par complémentarité de formes du piston (24) dans le manchon de verrouillage (20) et pour la fixation du manchon de verrouillage (20) aussi bien dans son sens de déplacement axial que dans son sens de déplacement radial.

3. Accouplement enfichable selon la revendication 1 ou 2, **caractérisé en ce que** le manchon de verrouillage (20) présente une came (29) s'engageant radialement vers l'intérieur qui, dans la seconde position de rotation, permettant le déplacement axial, du manchon de verrouillage (20), peut coulisser le long d'une partie aplatie (27) réalisée sur le carter de vanne (13) et, dans la première position de rotation encliquetée avec le carter de vanne (13), entre dans une rainure d'encliquetage (28), faisant suite dans le sens périphérique à la partie aplatie (27), du carter de vanne (13), l'alésage (23) conçu dans le carter de vanne (13) étant orienté de telle sorte que le piston (24) dépasse, dans sa position sortie, de la partie aplatie (27) du carter de verrouillage (13) et empêche ainsi une torsion du manchon de verrouillage (20) de la première position de rotation dans la seconde position de rotation.

4. Accouplement enfichable selon la revendication 3, **caractérisé en ce que** le piston (24) est prétendu au moyen d'un ressort de pression (26) disposé dans l'alésage (23) dans sa position située à l'intérieur du carter de vanne (13).

5. Accouplement enfichable selon la revendication 3 ou 4, **caractérisé en ce qu'**un manchon d'étanchéité (25) pour l'étanchéité de l'alésage (23) et pour le guidage étanche du piston (24) est inséré dans l'extrémité radialement extérieure de l'alésage (23), manchon contre lequel le ressort de pression (26) s'appliquant par une extrémité sur le piston (24) s'appuie par son autre extrémité.

6. Accouplement enfichable selon l'une quelconque des revendications 2 à 5, **caractérisé en ce qu'**un évidement (30) est conçu sur le côté inférieur, tourné vers le carter de vanne (13), de la came (28) pour le logement du piston (24) dans sa position sortie.

7. Accouplement enfichable selon la revendication 1 ou 2, **caractérisé en ce que** le manchon de verrouillage (20) présente une came (29) s'engageant radialement vers l'intérieur, qui, dans la seconde position de rotation, permettant le déplacement axial, du manchon de verrouillage (20), peut coulisser le long d'une partie aplatie (27) conçue sur le carter de vanne (13) et, dans la première position de rotation encliquetée avec le carter de vanne (13), entre dans une rainure d'encliquetage (28) faisant suite dans le sens périphérique à la partie aplatie (27), l'alésage (23) conçu dans le carter de vanne (13) étant disposé en dehors de la partie aplatie (27) et une portion périphérique (40) maintenant le piston (24), dans sa seconde position de rotation autorisant un déplacement du manchon de verrouillage (20), dans la position rentrée et un rétrécissement (41) faisant suite à la première portion dans le sens de rotation du manchon de verrouillage (20) pour le logement du piston (24) dans sa position sortie étant disposés dans le côté intérieur, entourant le carter de vanne (13) du manchon de verrouillage (20).

8. Accouplement enfichable selon la revendication 7, **caractérisé en ce que** la transition entre la portion périphérique (40) maintenant le piston (24) dans la position rentrée et le rétrécissement (41) est conçue comme arête de butée (42) efficace dans le sens de rotation du manchon de verrouillage (20) pour le piston (24) avec un rayon enfonçant le piston (24) dans l'alésage (23).

9. Accouplement enfichable selon la revendication 7 ou 8, **caractérisé en ce que** dans la portion périphérique (40), maintenant le piston (24) dans sa position rentrée, du manchon de verrouillage (20) est conçu un évidement (43) pour le logement du piston (20) dans sa position de sortie.

10. Accouplement enfichable selon la revendication 9, **caractérisé en ce que** les arêtes de délimitation (44), situées dans le sens périphérique, de l'évidement (43) sont formées avec un rayon enfonçant le piston (24) dans l'alésage (23).

11. Accouplement enfichable selon l'une quelconque des revendications 7 à 10, **caractérisé en ce que** le piston (24) est étanchéifié au moyen d'un joint (46) disposé sur son pourtour contre l'alésage (23).

12. Accouplement enfichable selon l'une quelconque des revendications 7 à 11, **caractérisé en ce que**, à chaque fois, une came (29) et une partie aplatie (27) associée et en conséquence deux alésages (23) avec des pistons (24) et des portions périphériques (40) attribuées ainsi que des rétrécissements (41) sont disposés dans un agencement symétrique sur les côtés se faisant face du carter de vanne (13) et du manchon de verrouillage (20).
